# EUROPEAN PATENT SPECIFICATION

(11) **EP 1 442 689 B1**
(45) Date of publication and mention of the grant of the patent: **16.08.2006**
(21) Application number: 04250576.8
(22) Date of filing: 03.02.2004
(51) Int. Cl.: A47J 27/21, A47J 31/60

(54) **Water heating appliances**
Wasserheizgeräte
Dispositifs de chauffage d'eau

(30) Priority: 03.02.2003 GB 0302456
(43) Date of publication of application: 04.08.2004
(73) Proprietor: STRIX LIMITED, Ronaldsway, Isle of Man IM9 2RG (GB)
(72) Inventor: Scott, Michael Janes, Isle of Man IM9 5PH (GB)
(74) Representative: Leckey, David Herbert

(56) References cited:
- EP-A- 1 238 615
- WO-A-01/47399
- WO-A-95/34187
- US-B1- 6 178 290

## Description

The present invention relates to water heating appliances and in particular to water heating appliances which incorporate means for treating the water heated in the appliance.

A water heating appliance which incorporates water treatment means to remove impurities, odours, limescale and so forth from the water, has been proposed for example in Applicant's International Patent Application WO 01/47399. This appliance comprises a water heating chamber, a chamber for receiving water to be heated and a water treatment means, more particularly a cartridge arranged between the water receiving chamber and the water heating chamber so that the water must flow through the treatment means into the heating chamber for heating.

An appliance of this type has also been produced commercially by Brita under the trade name Acclario®. A similar appliance is described in US-B1-6178290. In this product, the outlet from the treatment cartridge to the water heating chamber is selectively opened and closed by a manually operable flow control valve. When the water receiving chamber is first filled with water, this valve can be either open or closed but in order to allow the water to flow through the treatment cartridge, it must be opened. Once the desired amount of water has flowed into the water heating chamber, the valve is shut manually, whereupon the heater associated with the heating chamber can be energised to heat the water in that chamber. An interlock prevents the heating means being energised until such time as the flow control valve is shut.

This arrangement has the advantage that once the valve is closed no unheated water can flow into the heating chamber after water in that chamber has boiled, thereby cooling the heated water. It has the disadvantages, however, that it is slow, requiring filtering of the water to be completed before heating commences and also that it requires manual intervention after filtering has commenced to start the heating.

The present invention seeks to overcome or alleviate the above problem, and from a first aspect provides a water heating appliance comprising:
a water heating chamber having water heating means associated therewith;
a water receiving chamber for receiving water to be heated in the water heating chamber;
a water treatment means arranged between the water receiving chamber and the water heating chamber such that water flows from the water receiving chamber to the water heating chamber through the treatment means;
a flow control valve controlling the flow of water from said water treatment means to said water heating chamber; and
a boiling sensitive control associated with the heating means and operable to interrupt or reduce the power supply to the heating means in the event of water boiling in the water heating chamber, wherein:
   the flow control valve is operatively coupled to the boiling sensitive control such that upon operation of the control the flow control valve closes to prevent the flow of water into the water heating chamber.

The present invention is characterised over US-B1-6178290 by the characterising portion of claim 1.

Thus in accordance with the invention, the flow control valve is automatically closed once water in the water heating chamber boils so as to prevent unheated water entering the heating chamber and cooling the boiled water. However, prior to this, heating and filtering can occur simultaneously.

The boiling control can be operatively coupled to the flow control valve in any suitable manner. For example, they may be interconnected electrically, electromechanically or electronically, with a signal being sent by the boiling control to the close the valve. Preferably, however, the valve is mechanically coupled to the boiling control by a suitable linkage.

The boiling control preferably comprises a thermally sensitive actuator such as a bimetallic actuator which produces an operating movement which opens a set of switch contacts and which is also suitably transmitted to the valve. In the preferred embodiment, the actuator operates to move a trip lever which is suitably linked to the valve.

A control of this type is the Applicant's U18 control, the principle of operation of which is described in WO 95/34187. This control also incorporates an overheat protection control for the heating means.

A possible problem which may occur with the above arrangement is that unless the flow control valve is opened once again when, or before, the heater is reenergised, it is possible that the water heating chamber may have no water in it when the heater is reenergised causing the heating means to overheat, leading to operation of the protection control.

To overcome this problem, the flow control valve is preferably operatively coupled to an on-off switch for the heating means such that when the heating means is switched on, the flow control valve is opened. This will allow any water which has accumulated in the treatment cartridge to be discharged immediately into the heating chamber and onto base of the heating chamber to prevent the heater (which is usually secured to or provided on the underside of the base) overheating.

The on-off switch may be a separate switch, but preferably it is part of, or coupled to the boiling control, for example part of an integrated control such as the Applicant's U1830 control discussed above.

In the preferred embodiment the flow control valve is alternatively, or more preferably additionally, operatively coupled to filling means associated with the water receiving chamber so that the valve opens in response to actuation of the filling means. This will allow any water remaining in the cartridge to drain into the heating chamber while the receiving chamber is being refilled.

The filling means may, for example, comprise a lid, spout cover, or other member which has to be opened to allow filling of the water receiving chamber. Movement of the lid or member can then be suitably linked to the flow control valve and the boiling sensitive such valve to open it.

In the preferred embodiment, the filling means is operatively coupled to the on-off switch such that movement of the filling means to a filling position will not move that switch from its off to its on state. This will avoid the appliance being energised before the user actually turns the switch to an on position.

In the preferred embodiment, a lost motion mechanism may be provided between the filling means and the on-off switch.

A preferred embodiment of the invention will now be described by way of example only with reference to the accompanying drawings in which:
Figure 1 shows a schematic embodiment of the invention;
Figure 2 shows a wiring diagram of the appliance shown in Figure 1; and
Figures 3A to 3C show different operational states of the embodiment of Figure 1.

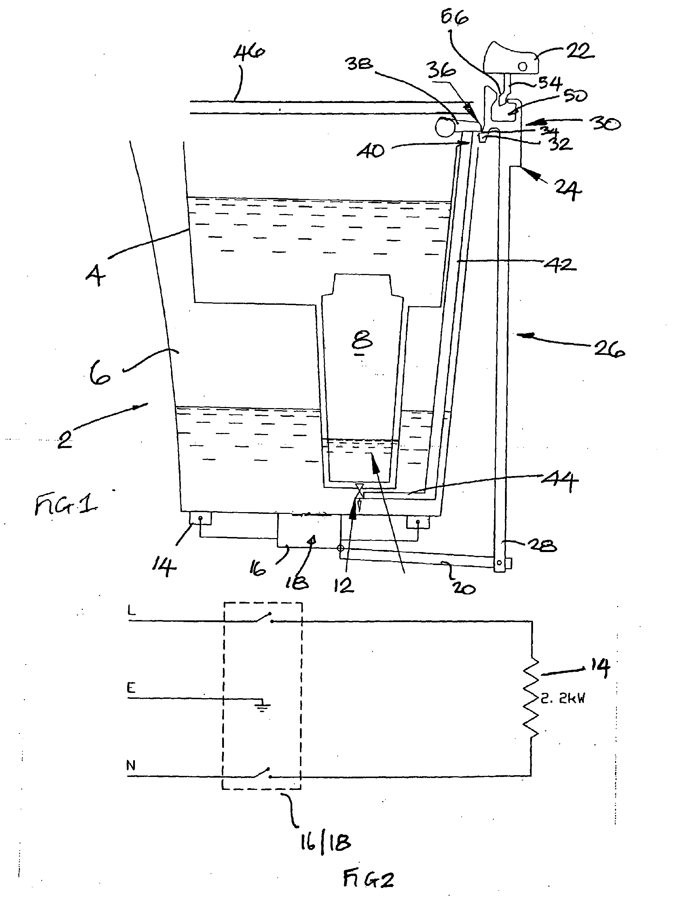

With reference to Figure 1, a cordless water boiling appliance 2 in accordance with the invention comprises a water heating chamber 4, a water receiving chamber 6 and a water treatment filter 8 arranged between the water receiving chamber 6 and water heating chamber 4. The water receiving chamber 6 may be suitably mounted in or on the water heating chamber 4. The water treatment cartridge 8 is received in a socket 10 provided in the base of the water receiving chamber 6. A one-way flow control valve 12 is arranged in the base of the socket 10 to control the flow of water into the heating chamber 4.

Water in the water heating chamber 4 is heated by heating means in the form of a sheathed electric heating element 14 which is suitably attached to the underside of the base of the water heating chamber 6. Alternatively, the heating means could comprise a thick film heating element provided on the underside of the base. The heating element 14 is rated at about 2 to 2.2kW.

Power is supplied to the heater 14 through a cordless electrical connector 16 which engages a complementary power supply connector on a power supply base for the appliance (not shown).

In the embodiment shown, the connector 16 forms part of an integrated control 18 for the appliance. In particular, it is preferably one of the Applicant's U18 controls which incorporates an electrical connector, overheat protection means for the heater 14 and a steam sensitive boiling control. Details of such a control are disclosed in WO 95/34187.

Briefly, however, the control 18 comprises a steam sensitive bimetallic actuator which is arranged beneath the floor of the water heating chamber 6, to which steam is conducted from the water heating chamber 6 by a steam passage (not shown). The bimetallic actuator acts on a trip lever 20 of the control 18 to open a set of contacts within the control 18 when water in the heating chamber boils. The trip lever 20 is also coupled to a pivotally mounted on-off knob 22 for the heater 14 by a rod 24.

In accordance with the invention, the trip lever 20 is linked to the flow control valve 12 by a linkage mechanism 26. As shown schematically, the linkage 26 comprises the rod 24 which is pivotally connected at its lower end 28 to the trip lever 20. The upper end 30 of the rod 24 is provided with a lug 32 having an upper surface 34 which underlies the end 36 of a pivotally mounted arm 38. The arm 38 engages with the upper end 40 of an L-shaped member 42. The lower end 44 of the L-shaped member 36 is coupled to the flow control valve 12.

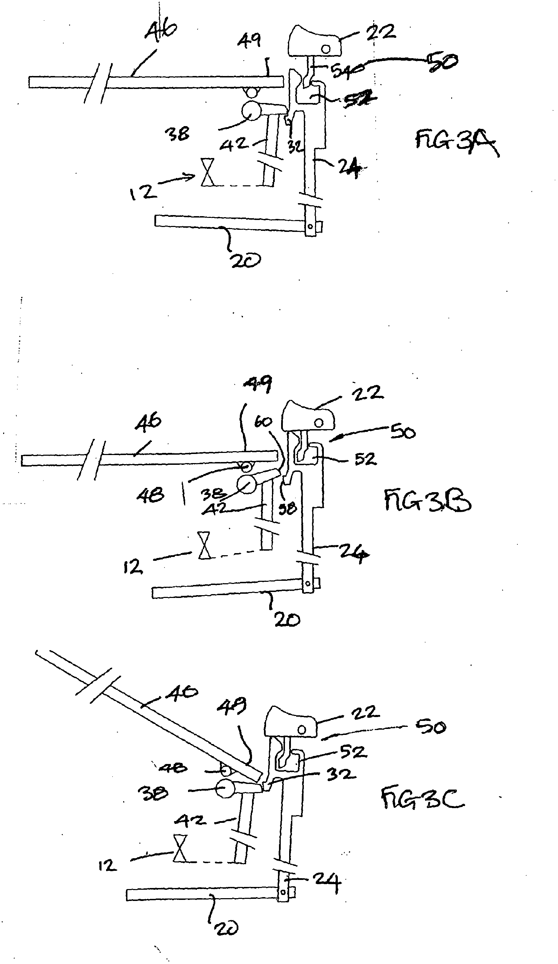

In addition to the above, the water receiving chamber 4 is closed by a lid 46 which is mounted about a pivot 48 (Figure 3). The end 49 of the lid 40 is arranged to cooperate with the pivot arm 38, as will be described further below.

The rod 24 is coupled to the on-off knob 22 and to the pivot arm 38 by a lost motion mechanism 50. The upper end 30 of the rod 24 is formed with a pocket 52 which receives a leg 54 depending from the on-off knob 22. In one limit position, the leg 54 just extends into the mouth 56 of the pocket(as shown in Figure 3A) and in the other it is fully received within the pocket 52 (as shown in Figure 3C),

Further, opposed end surfaces 58, 60 of the lug 34 and the pivot arm 38 are angled such that they the lug 32 can move downwardly past the pivot arm 38, for purposes to be described below.

Starting with the operating state shown in Figures 1 and 3A, the on-off knob 22 is in an on position and the heater 14 is energised. As shown, water is present both in the receiving chamber 4 and the heating chamber 6. The valve 12 is open allowing water to flow from the receiving chamber 4 into the heating chamber 6. In this operative state, then, water is both being treated and heated simultaneously.

Water will continue to drain into the water heating chamber 6 while the water therein is being heated. However, when the water in the water heating chamber 6 boils, the boiling sensitive control will operate and the trip lever 20 will be tripped to its "off" position, as shown in Figure 3B.

This turns off the heater 14 to stop water boiling in the chamber 6. It also causes the rod 24 to move upwardly. This will do two things. Firstly it will pivot the on-off knob 22 to its off position due to the interaction between the leg 4 of the knob and the mouth 56 of the pocket 52. Secondly it will cause the upper surface 34 of lug 32 to pick up the pivot arm 38 and lift the L-shaped member 42, thereby closing the valve 12. This prevents any cold water from entering the heating chamber 6 to cool the boiled water therein. Any untreated water will accumulate in the cartridge 8 to be released as a slug when the valve 12 is opened once more, as will be described below.

Heated water may them be dispensed from the heating chamber 6. When it is desired to re-fill the appliance, the lid 46 is lifted, as shown in Figure 3C. Opening the lid 46 pushes the L-shaped member 42 downwardly via the pivot arm 36 to open the valve 12, thereby allowing any water which has accumulated in the cartridge 8 to flow immediately into the heating chamber 6. The appliance is then removed from its power base, taken to a tap and filled.

Due to the shape and relative positions of the end surfaces 58, 60 of the lug 34 and the pivot arm 38, the pivot arm 38 can move down past the lug 32, thereby leaving the on-off knob 22 in its off position. This avoids the rod 24 being moved downwardly and closing of the switch contacts in the control unit 18, leaving the heater 14 deenergised.

Thus when the appliance is returned to its power base, the heater will not be energised until the on-off knob 22 is moved to its on position, as shown in Figure 3A, by the user. Once the knob 22 is moved to its on position, the operating cycle described above will be repeated.

It will be apparent that modifications may be made to the above described embodiment without departing from the scope of the claims. For example, in a simpler embodiment, the pivot arm 38 may act to move the rod 24 downwardly when opened to close the switch contacts in the control unit 18, in which case the lost motion mechanism described can be dispensed with and a knob 22 more directly attached to the trip lever 20.

Also, while the boiling control has been described as part of an integrated control /connector unit, this is not essential, as it can be a discrete unit. Furthermore, the invention is not limited to cordless appliances and can also be applied to corded appliances.

## Claims

1. A water heating appliance (2) comprising:
a water heating chamber (4) having water heating means (14) associated therewith;
a water receiving chamber (6) for receiving water to be heated in the water heating chamber (4);
water treatment means (8) arranged between the water receiving chamber (6) and the water heating chamber (4) such that water flows from the water receiving chamber (6) to the water heating chamber (4) through the treatment means (8);
a flow control valve (12) controlling the flow of water from said water treatment means (8) to said water heating chamber (4); and
a boiling sensitive control (18) associated with the heating means (14) and operable to interrupt or reduce the power supply to the heating means (14) in the event of water boiling in the water heating chamber (4) **characterised in that:**
the flow control valve (12) is operatively coupled to the boiling sensitive control (18) such that upon operation of the control (18) the flow control valve (12) closes to prevent the flow of water into the water heating chamber (4).

2. A water heating appliance as claimed in claim 1 wherein the flow control valve (12) is mechanically coupled to the boiling sensitive control (18) by a linkage (26).

3. A water heating appliance as claimed in claim 2 wherein the boiling sensitive control (18) comprises a thermally sensitive actuator which acts to open a set of switch contacts and which is also operable to close the valve (12).

4. A water heating appliance as claimed in claim 3 wherein the actuator operates to move a trip lever (20) which is linked to the valve (12).

5. A water heating apparatus as claimed in any preceding claim wherein the flow control valve (12) is operatively coupled to an on-off switch (22) for the heating means (14) so that the flow control valve (12) opens as the on-off switch (22) is switched to its on state.

6. A water heating appliance as claimed in claim 5 wherein said on-off swith (22) is part of the boiling sensitive control (18).

7. A water heating appliance as claimed in any preceding claim wherein the flow control valve (12) is operatively coupled to filling means associated with the water receiving chamber (6) so that the valve (12) opens in response to actuation of the filling means.

8. A water heating appliance as claimed in claim 7 wherein the filling means comprises a lid (46) or other member which has to be opened to allow filling of the water receiving chamber (6).

9. A water heating appliance as claimed in claim 18 wherein the lid (46) or member is mechanically linked to the valve (12).

10. A water heating appliance as claimed in any of claims 7 to 9 as dependent directly or indirectly upon claim 5 or 6 wherein the filling means is operatively coupled to the on-off switch (22) such that movement of the filling means to a filling position will not move that switch (22) from its off to its on state.

11. A water heating appliance as claimed in claim 10 wherein a lost motion mechanism is provided between the filling means and the on-off switch (22).

## Patentansprüche

1. Wassererhitzungsvorrichtung (2), umfassend:
eine Wassererhitzungskammer (4), welche dieser zugeordnete Wassererhitzungsmittel (14) aufweist;
eine Wasseraufnahmekammer (6) zum Aufnehmen von in der Wassererhitzungskammer (4) zu erhitzendem Wasser;
Wasserbehandlungsmittel (8), welche zwischen der Wasseraufnahmekammer (6) und der Wassererhitzungskammer (4) so angeordnet sind, dass Wasser von der Wasseraufnahmekammer (6) zu der Wassererhitzungskammer (4) durch die Behandlungsmittel (8) strömt;
ein Strömungs-Steuer-/Regelventil (12), welches die Strömung von Wasser von den Wasserbehandlungsmitteln (8) zu der Wassererhitzungskammer (4) steuert/regelt; und
eine koch-/siedeempfindliche Steuerung/Regelung (18), welche den Erhitzungsmitteln (14) zugeordnet ist und dazu betreibbar ist, im Falle eines Kochens/Siedens von Wasser in der Wassererhitzungskammer (4) die Stromzufuhr zu den Erhitzungsmitteln (14) zu unterbrechen oder zu reduzieren, **dadurch gekennzeichnet, dass**:
das Strömungs-Steuer-/Regelventil (12) betriebsmäßig mit der koch-/siedeempfindlichen Steuerung/Regelung (18) gekoppelt ist, so dass auf eine Betätigung der Steuerung/Regelung (18) hin das Strömungs-Steuer-/Regelventil (12) schließt, um die Strömung von Wasser in die Wassererhitzungskammer (4) hinein zu verhindern.

2. Wassererhitzungsvorrichtung nach Anspruch 1, in welcher das Strömungs-Steuer-/Regelventil (12) durch ein Verbindungsglied (26) mechanisch mit der koch-/siedeempfindlichen Steuerung/Regelung (18) gekoppelt ist.

3. Wassererhitzungsvorrichtung nach Anspruch 2, in welcher die koch-/siedeempfindliche Steuerung/Regelung (18) einen wärmeempfindlichen Aktuator umfasst, welcher derart arbeitet, dass er einen Satz von Schaltkontakten öffnet, und welcher außerdem zum Schließen des Ventils (12) betreibbar ist.

4. Wassererhitzungsvorrichtung nach Anspruch 3, in welcher der Aktuator so arbeitet, dass er einen mit dem Ventil (12) verbundenen Auslösehebel (20) bewegt.

5. Wassererhitzungsvorrichtung nach irgendeinem der vorhergehenden Ansprüche, in welcher das Strömungs-Steuer-/Regelventil (12) betriebsmäßig mit einem Ein-Aus-Schalter (22) für die Erhitzungsmittel (14) gekoppelt ist, so dass das Strömungs-Steuer-/Regelventil (12) öffnet, wenn der Ein-Aus-Schalter (22) in seinen Ein-Zustand geschaltet ist.

6. Wassererhitzungsvorrichtung nach Anspruch 5, in welcher der Ein-Aus-Schalter (22) Teil der koch-/siedeempfindlichen Steuerung/Regelung (18) ist.

7. Wassererhitzungsvorrichtung nach irgendeinem der vorhergehenden Ansprüche, in welcher das Strömungs-Steuer-/Regelventil (12) betriebsmäßig mit Füllmitteln gekoppelt ist, die der Wasseraufnahmekammer (6) zugeordnet sind, so dass das Ventil (12) in Reaktion auf eine Betätigung der Füllmittel öffnet.

8. Wassererhitzungsvorrichtung nach Anspruch 7, in welcher die Füllmittel einen Deckel (46) oder ein anderes Element umfassen, das zu öffnen ist, um ein Füllen der Wasseraufnahmekammer (6) zu ermöglichen.

9. Wassererhitzungsvorrichtung nach Anspruch 8, in welcher der Deckel (46) oder das Element mechanisch mit dem Ventil (12) verbunden ist.

10. Wassererhitzungsvorrichtung nach irgendeinem der Ansprüche 7 bis 9 in direkter oder indirekter Abhängigkeit von Anspruch 5 oder 6, in welcher die Füllmittel betriebsmäßig mit dem Ein-Aus-Schalter (22) derart gekoppelt sind, dass eine Bewegung der Füllmittel zu einer Füllstellung nicht den Schalter (22) von seinem Aus- zu seinem Ein-Zustand bewegt.

11. Wassererhitzungsvorrichtung nach Anspruch 10, in welcher ein Totgangmechanismus zwischen den Füllmitteln und dem Ein-Aus-Schalter (22) vorgesehen ist.

## Revendications

1. Dispositif de chauffage d'eau (2) comprenant :
une chambre de chauffage d'eau (4) présentant des moyens de chauffage d'eau (14) associés à celle-ci ;
une chambre de réception d'eau (6) destinée à recevoir l'eau qui va être chauffée dans la chambre de chauffage d'eau (4) ;
des moyens de traitement d'eau (8) agencé entre la chambre de réception d'eau (6) et la chambre de chauffage d'eau (4) de sorte que l'eau s'écoule depuis la chambre de réception d'eau (6) vers la chambre de chauffage d'eau (4) à travers les moyens de traitement (8) ;
une vanne de régulation de débit (12) régulant le débit de l'eau depuis lesdits moyens de traitement (8) vers ladite chambre de chauffage d'eau (4) ; et
une commande sensible à l'ébullition (18) associée au moyen de chauffage (14) et pouvant être actionnée pour interrompre ou réduire l'alimentation en énergie des moyens de chauffage (14) en cas d'ébullition d'eau dans la chambre de chauffage d'eau (4),
**caractérisé en ce que** la vanne de régulation de débit (12) est couplée de manière opérationnelle à la commande sensible à l'ébullition (18) de sorte que dès l'actionnement de la commande (18) la vanne de régulation de débit (12) se ferme pour empêcher l'écoulement d'eau vers la chambre de chauffage d'eau (4).

2. Dispositif de chauffage d'eau selon la revendication 1 dans lequel la vanne de régulation de débit (12) est mécaniquement couplée à la commande sensible à l'ébullition (18) par une liaison (26).

3. Dispositif de chauffage d'eau selon la revendication 2 dans lequel la commande sensible à l'ébullition (18) comprend un actionneur thermosensible qui agit pour ouvrir un jeu de contacts d'interrupteur et qui peut également être actionné pour fermer la vanne (12)

4. Dispositif de chauffage d'eau selon la revendication 3 dans lequel l'actionneur est actionné pour déplacer un levier de déclenchement (20) qui est lié à la vanne (12).

5. Dispositif de chauffage d'eau selon l'une quelconque des revendications précédentes dans lequel la vanne de régulation de débit (12) est couplée de manière opérationnelle à un interrupteur marche/arrêt (22) pour le moyen de chauffage (14) de sorte que la vanne de régulation de débit (12) s'ouvre lorsque l'interrupteur marche/arrêt (22) est commuté vers son état de marche.

6. Dispositif de chauffage d'eau selon la revendication 5 dans lequel l'interrupteur marche/arrêt (22) fait partie de la commande sensible à l'ébullition (18).

7. Dispositif de chauffage d'eau selon l'une quelconque des revendications précédentes dans lequel la vanne de régulation de débit (12) est couplée de manière opérationnelle à des moyens de remplissage associés à la chambre de réception d'eau (6) de sorte que la vanne (12) s'ouvre en réponse à l'activation des moyens de remplissage.

8. Dispositif de chauffage d'eau selon la revendication 7 dans lequel les moyens de remplissage comprennent un couvercle (46) ou un autre élément qui doit être ouvert pour permettre le remplissage de la chambre de réception d'eau (6).

9. Dispositif de chauffage d'eau selon la revendication 8 dans lequel le couvercle (46) ou l'élément est mécaniquement relié à la vanne (12).

10. Dispositif de chauffage d'eau selon l'une quelconque des revendications 7 à 9 comme dépendant directement ou indirectement de la revendication 5 ou 6 dans lequel les moyens de remplissage sont couplés de manière opérationnelle à l'interrupteur marche/arrêt (22) de sorte que le mouvement des moyens de remplissage vers une position de remplissage ne déplacera pas cet interrupteur (22) depuis son état d'arrêt vers son état de marche.

11. Dispositif de chauffage d'eau selon la revendication 10 dans lequel un mécanisme de déplacement à vide est fourni entre le moyen de remplissage et l'interrupteur marche/arrêt(22).
